(19) **Europäisches Patentamt / European Patent Office / Office européen des brevets**

(11) **EP 3 949 725 A1**

(12) # EUROPEAN PATENT APPLICATION
published in accordance with Art. 153(4) EPC

(43) Date of publication:
**09.02.2022 Bulletin 2022/06**

(21) Application number: **20782727.0**

(22) Date of filing: **31.03.2020**

(51) International Patent Classification (IPC):
***A01G 24/42*** *(2018.01)*

(52) Cooperative Patent Classification (CPC):
**A01G 24/42**

(86) International application number:
**PCT/JP2020/014886**

(87) International publication number:
**WO 2020/204044 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.04.2019 JP 2019072126**

(71) Applicant: **JSP Corporation
Tokyo 100-0005 (JP)**

(72) Inventors:
- **SASAKI, Hidehiro
Tokyo 100-0005 (JP)**
- **OHNUKI, Joji
Kanuma-shi, Tochigi (JP)**

(74) Representative: **Dehns
St. Bride's House
10 Salisbury Square
London EC4Y 8JD (GB)**

(54) **PLANT CULTIVATION MEDIUM**

(57) The medium for plant cultivation according to the present invention includes a bag body, and a crushed material obtained by crushing a foam body made of an aliphatic polyester-based resin and packed in the bag body in a compressed state, and in the medium a ratio of the bulk density of the crushed material after being packed in the bag body to the bulk density of the crushed material before being packed in the bag body is larger than 1 and 2 or less.

Fig.2

**Description**

Technical Field

The present invention relates to a medium for plant cultivation.

Background Art

In recent years, a plant factory that can stably produce chemical-free vegetables and the like without being affected by weather has begun to spread.

Since a plant factory requires advanced temperature control, nutrient solution control, and the like, as compared with conventional open-field cultivation, elevated cultivation is often adopted in place of soil cultivation. In the elevated cultivation, a trestle is installed on the floor surface or ground surface in a plant factory facility, a tray for cultivation is placed on the trestle and filled with a medium for plant cultivation in place of soil, and plants are planted and cultivated in this medium. As the medium for plant cultivation, an agricultural material that is relatively lightweight as compared with soil, for example, rock wool, peat moss, or coco peat is used.

Among such agricultural materials, since peat moss and coco peat are organic materials derived from plants, the peat moss and the coco peat can be treated as general wastes after being used as a medium for plant cultivation and can also be decomposed by microorganisms in soil.

However, since rock wool is an inorganic material derived from natural mineral, it has been deemed that there is no disposal method other than to dispose of the rock wool as industrial wastes by landfill or the like, under the circumstances of waste disposal in countries and regions where garbage is thoroughly separated and recycled, especially in Japan.

Further, in these agricultural materials, the air gaps and voids that can retain air are fewer as compared with soil, most of the surroundings of roots of a plant, so-called root area is occupied by water or a nutrient solution, and a medium for plant cultivation in a solid state, and there has been little room to retain the air. For this reason, although all of the agricultural materials have a high water-retention property, the uptake of air into a plant from the roots becomes insufficient, and which may cause agriculturally unfavorable situations such as poor growth and root rot, and the room for improving the air permeability has been left. In view of this, a medium for plant cultivation in which resin granules being lightweight and further having a favorable water-retention property and favorable air permeability are used as the main material has been proposed (see, for example, Patent Literatures 1 and 2).

The medium for plant cultivation disclosed in Patent Literature 1 is made of granules of an aliphatic polyester resin synthesized from mainly a glycol and an aliphatic dibasic acid, and as the granules, granules obtained by pulverizing a molding such as a foam body of an aliphatic polyester resin to such an extent that the granules can pass through a sieve with an opening of 10 mm are used. Since the medium for plant cultivation has biodegradability although the aliphatic polyester resin is a synthetic polymer, it is considered that by mixing the medium for plant cultivation with soil, the apparent specific gravity of soil can be reduced, and the drainage property, the water-retention property, and the air permeability can be improved. Further, it is considered that the medium for plant cultivation is decomposed by organisms, and as a result of which voids are generated in soil, and the reduction in the apparent specific gravity of the soil can be accelerated.

The medium for plant cultivation disclosed in Patent Literature 2 has a water-permeable layer formed of resin beads, of which at least a part of the cells existing on the surface is eliminated by heat treatment for a resin foam body, 50% or more of the resin beads have a particle diameter within the range of 0.5 to 30 mm, the average particle diameter of the resin beads is within the range of 5 to 30 mm, and the true specific gravity is within the range of 0.1 to 0.5. In this medium for plant cultivation, the water-permeable layer is formed by using the resin beads as described above, and thus, it is considered that even if the medium for plant cultivation is placed and packed on concrete or the like, and plants are planted in the medium, the balance between the drainage property and the water-retention property is favorable by the water-permeable layer, and plants can be favorably cultivated.

Citation List

Patent Literature

Patent Literature 1: JP H07-26262 A
Patent Literature 2: JP H08-252031 A

Summary of Invention

Technical Problem

However, in the medium for plant cultivation disclosed in Patent Literature 1, it is premised that granules being foam bodies of an aliphatic polyester resin are necessarily mixed with soil in combination. Alternatively, if the granules are used alone without being mixed with soil, the value of true density is extremely low, and thus, there has been a problem that it is difficult to stably plant a plant because the granules flow or float when a nutrient solution is added in a cultivation tray and supplied to the plant.

Patent Literature 2 discloses that resin beads are packed in a water-permeable bag-shaped body, but in order to improve the water permeability, the packing amount of the resin beads has to be set smaller than the capacity of the bag-shaped body. Further, Patent Literature 2 also discloses that as the resin foam body that is a main material of a medium for plant cultivation, any one of the resins of a polystyrene-based resin such as polystyrene, a polyolefin-based resin such as polyethylene, or polypropylene, and various kinds of copolymers such as ABS (acrylonitrile, butadiene, styrene) or MBS (methyl methacrylate, butadiene, styrene) is used, but such resin foam bodies have no biodegradability. For this reason, a mixture of the resin-based wastes remaining without being decomposed by microorganisms in soil after plant cultivation and the residues of plants rooted around in the resin-based wastes is generated, and thus, the mixture has been required to be disposed as industrial wastes by landfill or the like similarly as for rock wool. Accordingly, as in Patent Literature 2, when a resin foam body having no biodegradability is used as the main material of a medium for plant cultivation, not only the environmental problem of generation of industrial wastes, but also the economic problem of increase in burden of treatment procedures and treatment costs as the industrial wastes has arisen.

In view of this, the present inventors have intensively conducted the tests and studies on the development of a medium for plant cultivation with a small environmental load, which can stably plant a plant although it is lightweight, can achieve both of the water-retention property and the air permeability, and further can be decomposed and composted (compostable) by microorganisms in soil after plant cultivation. Under such a circumstance, the present inventors thus have developed a medium for plant cultivation, which can stably plant a plant although it is lightweight and can achieve both of the water-retention property and the air permeability, by using one obtained by compressing and consolidating a crushed material that has been obtained by crushing a foam body of an aliphatic polyester-based resin having biodegradability so that the crushed material is within the specific range of bulk density. Moreover, it has been confirmed that this medium for plant cultivation can be composted together with plant residues after use.

The present invention is made in consideration of the circumstances as described above, and an object of the present invention is to provide a medium for plant cultivation with a small environmental load, which can achieve both of the water-retention property and the air permeability and further can be decomposed and composted (compostable) by microorganisms in soil after plant cultivation.

Solution to Problem

In order to solve the problem described above, the medium for plant cultivation according to the present invention includes a bag body, and a crushed material obtained by crushing a foam body made of an aliphatic polyester-based resin and packed in the bag body in a compressed state, and in the medium, a ratio of the bulk density of the crushed material after being packed in the bag body to the bulk density of the crushed material before being packed in the bag body is larger than 1 and 2 or less.

In the medium for plant cultivation according to the present invention, a specific surface area of the crushed material before being packed in a bag body is preferably 0.5 $m^2/g$ to 2.0 $m^2/g$.

Further, in the medium for plant cultivation according to the present invention, a bulk density of the crushed material before being packed in a bag body is preferably 10 $kg/m^3$ or more and less than 100 $kg/m^3$.

Furthermore, in the medium for plant cultivation according to the present invention, the bag body is preferably a knit fabric, a woven fabric, or a nonwoven fabric, made of an aliphatic polyester-based resin.

In addition, in the medium for plant cultivation according to the present invention, the foam body is preferably a polylactic acid-based resin.

Advantageous Effects of Invention

According to the medium for plant cultivation of the present invention, a medium for plant cultivation with a small environmental load, which can achieve both of the water-retention property and the air permeability and further can be decomposed and composted (compostable) by microorganisms in soil after plant cultivation can be realized.

Brief Description of Drawings

Fig. 1 is a schematic perspective view showing schematically a first embodiment of the medium for plant cultivation according to the present invention.

Fig. 2 is a schematic sectional view in a cross section taken along the line A-A' of Fig. 1.

Fig. 3 is a partially-broken schematic perspective view showing schematically a second embodiment of the medium for plant cultivation according to the present invention, that is, an embodiment in which multiple media for plant cultivation of the first embodiment are arranged in the short direction and wrapped with a wrapping film.

Fig. 4 is a schematic sectional view in a cross section taken along the line B-B' of Fig. 3.

Fig. 5 is a photograph of cross sections showing shapes of root areas of the tomatoes cultivated in the medium for plant cultivation of Example and in a coco peat medium of the control.

Description of Embodiments

The medium for plant cultivation according to the present invention will be described in detail below with reference to the drawings.

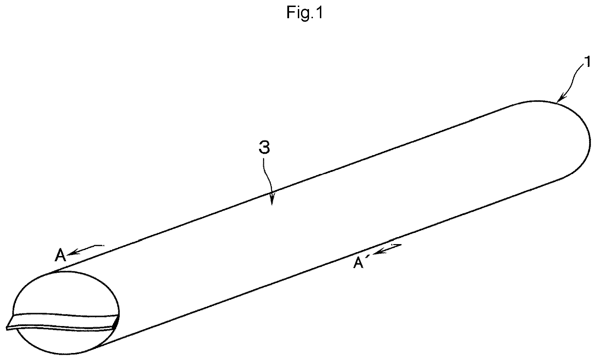

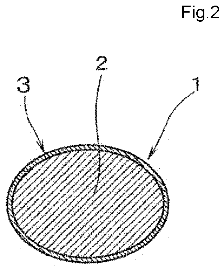

Fig. 1 is a schematic perspective view showing schematically a first embodiment of the medium for plant cultivation according to the present invention. Fig. 2 is a schematic sectional view in a cross section taken along the line A-A' of Fig. 1.

The medium for plant cultivation 1 of the present embodiment includes a bag body 3, and a crushed material 2 obtained by crushing a foam body made of an aliphatic polyester-based resin and packed in the bag body 3 in a compressed state. A ratio of the bulk density of the crushed material 2 after being packed in the bag body 3 (hereinafter, referred to as "crushed material after being packed") to the bulk density of the crushed material 2 before being packed in the bag body 3 (hereinafter, also referred to as "crushed material before being packed") is larger than 1 and 2 or less. That is, the crushed material 2 obtained by crushing a foam body made of an aliphatic polyester-based resin is characterized by being packed in the bag body 3 in a compressed state with a ratio of the bulk density of the crushed material 2 after being packed to the bulk density of the crushed material 2 before being packed of larger than 1 and 2 or less.

As described above, even though the aliphatic polyester-based resin is a synthetic polymer, the aliphatic polyester-based resin has biodegradability, and has a property of being decomposable by microorganisms in soil. The aliphatic polyester-based resin contains an aliphatic ester as the main component in the main chain. A content ratio of the aliphatic ester of the aliphatic polyester-based resin is at least 60% by mole, preferably 80 to 100% by mole, and more preferably 90 to 100% by mole. The aliphatic polyester-based resin is a polyester containing an aliphatic polycarboxylic acid component and an aliphatic polyhydric alcohol component, or a polyester containing an aliphatic hydroxycarboxylic acid component, and examples of the aliphatic polyester-based resin include polybutylene succinate, polybutylene adipate, and polylactic acid. In particular, the aliphatic polyester-based resin constituting a foam body is preferably a polylactic acid-based resin.

The polylactic acid-based resin is physically stable in an ordinary use environment, and can be used for a long period of time. Further, in an environment where adequate moisture and adequate temperature are maintained as inside compost or in soil, the polylactic acid-based resin after use is easily decomposed (hydrolyzed), and then the decomposition (biodegradation) by microorganisms progresses, and finally, the polylactic acid-based resin is completely decomposed into water and carbon dioxide. For this reason, by using the polylactic acid-based resin as the main material of a medium for plant cultivation 1, the medium can be composted together with plant residues such as stems and leaves, and the disposal cost of the medium after use can be significantly reduced.

As described above, when a crushed material 2 of foam bodies of a polylactic acid-based resin is used as the main material of the medium for plant cultivation 1, the medium can stably plant a plant although it is lightweight, and can achieve both of the water-retention property and the air permeability. Furthermore, when the crushed material 2 of foam bodies of a polylactic acid-based resin is used as the main material of the medium for plant cultivation 1, the hydrolysis or the biodegradation by microorganisms proceed inside compost or in soil after plant cultivation, and the medium for plant cultivation 1 with a small environmental load that is compostable can be realized.

The polylactic acid-based resin is preferably a polymer containing 50% by mole or more of the component units derived from lactic acid. Examples of the polylactic acid-based resin include (a) a polymer of lactic acid, (b) a copolymer of lactic acid and other aliphatic hydroxycarboxylic acid, (c) a copolymer of lactic acid, aliphatic polyhydric alcohol, and aliphatic polycarboxylic acid, (d) a copolymer of lactic acid and aliphatic polycarboxylic acid, (e) a copolymer of lactic acid and aliphatic polyhydric alcohol, and (f) a mixture of any combination of these (a) to (e). Further, examples of the polylactic acid include so-called stereocomplex polylactic acid, and stereoblock polylactic acid. In this regard, specific examples of the lactic acid include L-lactic acid, D-lactic acid, and DL-lactic acid, L-lactide, D-lactide, and DL-lactide that are cyclic dimers of the L-lactic acid, the D-lactic acid, and the DL-lactic acid, respectively, and a mixture thereof.

Examples of other aliphatic hydroxycarboxylic acid in the above (b) include glycolic acid, hydroxybutyric acid, hydroxyvaleric acid, hydroxycaproic acid, and hydroxyheptanoic acid.

In addition, examples of the aliphatic polyhydric alcohol in the above (c) and (e) include ethylene glycol, 1,4-butanediol, 1,6-hexanediol, 1,4-cyclohexanedimethanol, neopentyl glycol, decamethylene glycol, glycerin, trimethylol propane, and pentaerythritol.

Further, examples of the aliphatic polycarboxylic acid in the above (c) and (d) include succinic acid, adipic acid, suberic acid, sebacic acid, dodecane dicarboxylic acid, succinic anhydride, adipic anhydride, trimesic acid, propanetricarboxylic acid, pyromellitic acid, and pyromellitic anhydride.

Examples of the foam body include an expanded strand, a foamed molding, and an extruded foam body, in addition to foamed beads obtained from resin beads. Among them, foamed beads are preferable because they are easy to have a fine and uniform cell diameter and a fine and uniform cell film thickness.

The foam body having a large number of fine cells therein, can be obtained by producing resin beads from an aliphatic polyester-based resin, and foaming the resin beads. In this regard, although the foam body has fine cells formed therein, the surface of the foam body is generally smooth, and the performance due to the fine cells inside is not completely exhibited.

In view of this, in the present invention, by using a crushed material 2 obtained with crush of the foam body, as the main material of a medium for plant cultivation 1, and allowing the fine cells inside the foam body to expose on the surface of the crushed material 2, the increase in the specific surface area of the crushed material 2 is achieved. Further, such a crushed material 2 is packed in a bag body 3 in a compressed state. The specific surface area of the crushed material 2 is preferably 0.5 m$^2$/g to 2.0 m$^2$/g.

The average particle diameter of the foam bodies is preferably 3 to 15 mm, and more preferably 5 to 10 mm. When the average particle diameter of the foam bodies is in the above range, the foam bodies easily have a fine and uniform cell diameter and a fine and uniform cell film thickness, and a crushed material after crush of the foam bodies also easily have a uniform cell diameter and a uniform cell film thickness, and therefore, this is preferable.

The apparent density of the foam bodies is preferably 12 to 30 kg/m$^3$, more preferably 14 to 25 kg/m$^3$, and furthermore preferably 15 to 20 kg/m$^3$. When the apparent density of the foam bodies is in the above range, a crushed material having an excellent lightweight property is easily obtained, and therefore, this is preferable.

The average particle diameter and apparent density of the foam bodies are determined as follows. First, the foam bodies are left to stand for two days under the conditions of a relative humidity of 50%, a temperature of 23°C, and 1 atm. Next, a graduated cylinder in which water at a temperature of 23°C is put is prepared, and an arbitrary amount of the foam bodies left to stand for two days are submerged in the water inside the graduated cylinder by using a tool such as a wire mesh. Further, while taking into consideration the volume of the tool such as a wire mesh, the volume [L] of the foam bodies, which can be read from the rise in water level, is measured. By dividing this volume by the number of the foam bodies put in the graduated cylinder, the average volume per foam body is calculated. Subsequently, a diameter of a virtual perfect sphere having the same volume as that of the obtained average volume is defined as the average particle diameter [mm] of the foam bodies. Furthermore, the apparent density of the foam bodies is determined by dividing the mass of the foam bodies put in the graduated cylinder by the volume of the foam bodies.

The average cell diameter of foam bodies is preferably 30 to 500 $\mu$m, and more preferably 50 to 250 $\mu$m. When the average cell diameter satisfies the above range, the independent cells are destroyed at the time of crushing the foam bodies, and a crushed material containing flaky portions derived from cell films of the original foam bodies is obtained, and further the shape tends to contain edges surrounding the flaky portions derived from cell films of the original foam bodies and nodes where the edges gather, and the specific surface area can be increased. As a result, a medium that is excellent in the water-retention property is easily obtained, and therefore, this is preferable. Further, the increase in the specific surface area increases a contact area with a nutrient solution, and thus an effective means for ensuring a certain level of water retention performance as the medium is obtained.

On the basis of an enlarged photograph with a microscope of a cutting plane obtained by dividing a foam body into approximately two equal parts, the average cell diameter of foam bodies can be determined as follows. In the enlarged photograph of a cutting plane of a foam body, four line segments passing through the approximate center of a cutting plane of a cell are drawn from one surface to the other surface of the foam body. In this regard, the line segments are drawn so as to form radial straight lines extending in eight directions at equal intervals from the approximate center of a cutting plane of a cell to a surface of a cut particle. Next, the number of cells (n1 to n4) that intersect with the four line segments is counted, and the total sum of the number of cells intersecting respective line segments, N = n1 + n2 + n3 + n4 (pieces) is determined. Subsequently, the total sum of length of four line segments, L ($\mu$m) is determined, and the average cell diameter (d') of foamed beads is calculated from the total sum L and the total sum N, by the following equation (1).

$$d' = L / (0.616 \times N) ... (1)$$

This work is performed on randomly selected 10 foam bodies, and the value obtained by arithmetically averaging the average cell diameter of the foam bodies is defined as the average cell diameter (d) of the foam bodies. The above equation (1) is an equation for determining the average diameter of cell spheres when the cells are each spherical and have a substantially uniform size, and is disclosed in item "4.2.2" on page 37 of "Plastic Foam Handbook" (publisher: THE NIKKAN KOGYO SHIMBUN, LTD., issued on February 28, 1973).

The average cell film thickness of foam bodies is preferably 3 $\mu$m or less, more preferably 2 $\mu$m or less, and furthermore preferably 1.5 $\mu$m or less. When the average cell film thickness satisfies the above range, the crushed material obtained with crush of foam bodies can be in a flaky state and have a low bulk density, and therefore, this is preferable. On the other hand, from the viewpoint of preventing the crushed material from becoming extremely fine when the cell film is excessively broken with the crush, the average cell film thickness is preferably 0.5 $\mu$m or more, and more preferably 0.7 $\mu$m or more.

The average cell film thickness of foam bodies is calculated by using the following equation (2) from the average cell diameter "d" measured by the above method.

$$V_S = (\rho f - \rho g)/(\rho s - \rho g) = [(d + T)^3 - d^3]/(d + T)^3 ... (2)$$

In the equation, $V_S$ represents a volume fraction of a base resin, pf represents an apparent density (g/cm$^3$) of foamed beads, ps represents a density (g/cm$^3$) of a base resin, pg represents a gas density (g/cm$^3$) in a cell, d represents an average cell diameter ($\mu$m), and T represents an average cell film thickness ($\mu$m). The above equation is a relational equation of the average cell diameter and the average cell film thickness, and is disclosed in item "1.3.2" on page 222 of "Plastic Foam Handbook" (publisher: THE NIKKAN KOGYO SHIMBUN, LTD., issued on February 28, 1973). If the average cell diameter of foamed beads of the present invention is determined by the equation (2), the average cell film thickness (T) of foamed beads is determined.

As the method for producing a foam body of an aliphatic polyester-based resin, a conventionally-known method can be appropriately used, and various kinds of additive agents such as a foaming agent and the like that are usually used for producing a foam body may be added as long as the hydrolyzability and biodegradability of the resin are not reduced or the growth of a plant is not inhibited. As the method for producing a foam body, for example, a method in which a foam body is obtained by two-step foaming by a melt foam forming method is preferable. In this method, at first, as "one-step foaming", resin beads of an aliphatic polyester-based resin and a polylactic acid-based resin are dispersed in an aqueous dispersion medium in a sealed container, and the resin beads are impregnated with a foaming agent under high temperature and high pressure, and the impregnated resin beads are discharged into an area under a pressure lower than the internal pressure of the sealed container for foaming. Pre-foamed beads of an aliphatic polyester-based resin and a polylactic acid-based resin, which are obtained by the one-step foaming, may be referred to as "one-step foamed beads".

Further, as "two-step foaming", the one-step foamed beads are pressurized with, for example, an inorganic gas such as air in a pressure resistant container to apply the internal pressure, and then are steam-heated for further foaming. Pre-foamed beads of an aliphatic polyester-based resin, which are obtained by the two-step foaming, may be referred to as "two-step foamed beads".

As for the crush of the foam bodies of an aliphatic polyester-based resin thus obtained, a conventionally-known method can be appropriately used, and for example, crushing treatment by a commercially-available crusher is mentioned. In addition, as for the obtained crushed material 2, the particle diameter of the crushed material 2 can be adjusted to a certain value or less by a method such as fractionation of components through a sieve.

Further, in the present invention, the specific surface area of the crushed material 2 before being packed is preferably 0.5 m$^2$/g to 2.0 m$^2$/g, more preferably 1.0 m$^2$/g to 2.0 m$^2$/g, and furthermore preferably 1.2 m$^2$/g to 1.8 m$^2$/g. If the specific surface area is within the above range, a nutrient solution and air are favorably retained by the fine cells of the crushed material 2, and as a result of which the water-retention property and air permeability that are suitable for the growth of a plant, both can be achieved at a high level without causing any root rot in a plant, and therefore, this is preferable. In this regard, in the present specification, the value of "specific surface area" is measured by a Brunauer-Emmett-Teller (BET) method due to low-temperature low-humidity physical adsorption of an inert gas (for example, nitrogen gas).

The crushed material before being packed has a proportion of the crushed material passing through a sieve with an opening of 4 mm is preferably 90% by mass or more, and a proportion of the crushed material passing through a sieve with an opening of 1.7 mm is more preferably 90% by mass or more. On the other hand, from the viewpoint that if the crushed material is extremely small, the bulk density of the crushed material increases, the crushed material before being packed has a proportion of the crushed material not passing through a sieve with an opening of 45 $\mu$m is preferably 90% by mass or more. In this regard, the above opening is a nominal opening of a sieve mesh defined on the basis of JIS Z8801-1: 2006.

The number of crushes can be calculated on the basis of the following equation (3).

(The number of crushes) = (Average particle diameter of foam bodies before being crushed)/(Opening of sieve through which 90% by mass or more of crushed material before being packed passed) ... (3)

The number of crushes is preferably 1.1 to 5, and more preferably 1.5 to 4. If the number of crushes is within the above range, it means that the foam bodies are appropriately crushed, and the water-retention property and air permeability of the medium for plant cultivation, both can be easily achieved, and therefore, this is preferable.

In the medium for plant cultivation 1 according to the present invention, a crushed material 2 is packed in a bag body 3. The crushed material 2 is in a compressed state inside the bag body 3, and as a result of which, the distance between the particles of the crushed material 2 becomes uniform, and the capillarity is easy to occur. Accordingly, the water retention rate as the medium is improved. In this regard, in the present specification, the treatment for making the volume of the crushed material 2 in a compressed state is referred to as consolidation treatment.

Specifically, the compressed state of the crushed material 2 is characterized by being in a compressed state with a ratio of the bulk density of the crushed material 2 after being packed to the bulk density of the crushed material 2 before being packed of larger than 1 and 2 or less. In this regard, in the present specification, the value of the "bulk density of a crushed material before being packed" is determined on the basis of JIS K6911-1995 Testing methods for thermosetting plastics. The bulk density of a crushed material 2 before being packed is calculated on the basis of the following equation (4).

Bulk density (kg/m$^3$) of crushed material before being packed = [Mass (kg) of graduated cylinder with crushed material put therein - Mass (kg) of graduated cylinder]/[Internal volume (m$^3$) of graduated cylinder] ... (4)

Further, the bulk density of a crushed material 2 after being packed is calculated on the basis of the following equation (5).

Bulk density (kg/m$^3$) of crushed material after being packed = {Mass (kg) of crushed material after being packed - Mass (kg) of bag body}/{Internal volume (m$^3$) of crushed material after being packed} ... (5)

In this regard, the internal volume of the crushed material after being packed is calculated from the outer diameter of the bag body in which the crushed material is packed in a compressed state.

If the ratio of the bulk density of the crushed material 2 after being packed to the bulk density of the crushed material 2 before being packed is within the above range, when the crushed material 2 after consolidation treatment is used as a medium for plant cultivation 1, the distance between the particles of the crushed material 2 becomes uniform, and the capillarity is easy to occur, and as a result of which, the water retention rate of the medium can be improved.

As the method for controlling the ratio of the bulk density of the crushed material 2 after being packed to the bulk density of the crushed material 2 before being packed, for example, adjustment of the amount of the crushed material 2 to be packed into a bag body 3 is mentioned.

The bulk density of a crushed foam body generally tends to be higher than the bulk density of the original foam body. The crushing treatment is nothing but the act of destroying the independent cell structure of the foam body, and the destruction of the cell structure results in the reduction of gasphase volume of the foam body that is a composite of so-called gas phase and solid phase, as the proportion. Accordingly, the bulk density of the foam body after being crushed tends to be higher than the bulk density of the foam body before being crushed. In the present invention, the bulk density of the crushed material 2 before being packed is preferably 10 kg/m$^3$ or more and less than 100 kg/m$^3$, more preferably 10 kg/m$^3$ or more and 40 kg/m$^3$ or less, and furthermore preferably 12 kg/m$^3$ or more and 30 kg/m$^3$ or less. If the bulk density is within the above range, the desired water retention performance can be exhibited, and the planting of a plant can be stably performed.

The bag body 3 into which a crushed material 2 of foam bodies is packed is not particularly limited as long as it has biodegradability similarly to that of the crushed material 2, and as the bag body 3, for example, a knit fabric, a woven fabric, or a nonwoven fabric, made of an aliphatic polyester-based resin is preferable. Further, it is preferable that the bag body 3 has elasticity. In the present specification, the term "knit fabric" means a cloth product obtained by creating a product shape one by one in manner of knotting yarns and fibers. In addition, in the present specification, the term "woven fabric" means a cloth product obtained by creating a cloth step by step with a structure in which yarns intersect by using a large number of warp yarns and one or more weft yarns.

As the yarn constituting the bag body 3, it is preferable to use a three-dimensional crimped yarn made of an aliphatic polyester-based resin, and in particular, it is preferable to use a temporary crimped yarn that is a type of multifilament fiber yarns made of a polylactic acid-based resin. As for the expansion and contraction characteristics of such a yarn, for example, the compliance ratio (CR) value is preferably 10% or more, more preferably 20% or more, and furthermore preferably 40% or more. The CR value is an abbreviation for compliance ratio, and is one of the indexes for evaluating the relationship between the load on fiber and the elongation of fiber. The CR value is an eigenvalue that is different depending on the type of fiber, and it means that the higher the CR value is, the more elastic the fiber is.

As the bag body 3 of a knit fabric, for example, an elastic knit bag or the like is mentioned. Further, as the bag body 3 of a woven fabric, for example, a spandex woven fabric or the like is mentioned. Furthermore, as the bag body 3 of a nonwoven fabric, a spandex nonwoven fabric or the like is mentioned. The method for producing these bag bodies 3 is not particularly limited, and examples of the method include a method of machine knitting or machine weaving by a fully automatic knitting machine, a fully automatic weaving loom, or the like, and a method of melt-blown nonwoven fabric or the like. The bag body 3 may be a bag body 3 obtained as a tubular knit fabric, woven fabric, or nonwoven fabric, having open ends at both ends, and then one of the ends is sealed by heat fusion or the like or is formed as a closed end in advance.

For example, when a crushed material 2 is packed into the above elastic knit bag, the consolidation degree of the crushed material 2 after being packed is preferably in the range of 1.05 to 1.4. By setting the consolidation degree in the above range, a medium for plant cultivation having an excellent water retention property can be obtained.

The consolidation degree is calculated on the basis of the following equation (6).

$$\text{(Consolidation degree)} = \text{(Bulk density of crushed material before being packed)}/\text{(Bulk density of crushed material after being packed)} \quad \text{... (6)}$$

The consolidation degree, and the ratio of the bulk density of the crushed material 2 after being packed to the bulk density of the crushed material 2 before being packed can be controlled by adjusting the amount of the crushed material 2 to be packed into the bag body 3.

The open end of the bag body 3 in which a crushed material 2 of foam bodies is packed is sealed, for example, by tightening or sewing with a string or the like of a three-dimensional crimped yarn made of an aliphatic polyester-based resin, or by heat fusion of resin components by a sealer incorporating electric heating wire, or the like.

The outer diameter of the medium for plant cultivation 1 produced in this way is not particularly limited as long as the medium can be housed in a cultivation tray or other plant cultivation containers. Of course, if the ratio of the bulk density of the crushed material 2 after being packed to the bulk density of the crushed material 2 before being packed is within a predetermined numerical range, the crushed material 2 of foam bodies can be housed in a bag body 3 so as to be an arbitrary shape corresponding to the internal shape of a plant cultivation container for housing the medium for plant cultivation 1. When considering the shape of a cultivation tray used in a large-scale plant factory, for example, a long bag body 3 having a length of around 1000 mm is suitably used. Further, when considering the handling, portability, or the like of the medium for plant cultivation 1, the diameter is preferably around 50 to 150 mm.

As for the consolidation treatment of the medium for plant cultivation 1 in the present invention, the packing amount of the crushed material 2 of foam bodies into the above-described bag body 3 is adjusted so that the crushed material 2 is in a compressed state, and then soil or sand, and other existing media for plant cultivation, for example, an agricultural material such as rock wool, peat moss, or coco peat, can be stacked in layers on the bag body 3 in which the crushed material 2 is packed, and further can also be consolidated.

As described above, in a case where a laminate structure of a medium for plant cultivation 1, and soil and other agricultural materials is formed, and consolidated, it is preferable that the medium for plant cultivation 1 is arranged so as to be on the root area side in the lowermost part at all times. By arranging the medium for plant cultivation 1 to be in the lowermost part, the roots of a plant are elongated mainly into the inside of the medium for plant cultivation 1, and the influence of the soil and other agricultural materials on the root area can be suppressed to the minimum extent. In addition, in the medium for plant cultivation 1, since the exterior is a bag body 3, only the plant residues and the medium for plant cultivation 1 that is easily composted can be easily separated together with the bag body 3 from the soil and other agricultural materials after plant cultivation.

As for consolidation treatment other than the consolidation treatment of the present invention, there are, for example, the following methods. The first method is a method in which a crushed material 2 of foam bodies is arranged directly so as to be in the lowermost part in a layer form without being packed into a bag body, and soil and the like are arranged on the crushed material 2 of foam bodies arranged in the layer form. In this case, by the mass of the soil arranged on the crushed material 2, the crushed material 2 is consolidated. The second method is a method in which a crushed material 2 of foam bodies is packed into a bag body without being made to be in a compressed state (that is, the packing amount of the crushed material 2 of foam bodies into a bag body is set smaller than the capacity of the bag body), and the bag body in which the crushed material 2 of foam bodies is packed is arranged so as to be in the lowermost part, and soil is arranged on the bag body. In also this case, similarly to the above, by the mass of the soil, the crushed material 2 in the bag body is consolidated. The third method is a method in which a crushed material 2 of foam bodies is in-die formed in a compressed state to obtain a foamed molding, and thus is consolidated.

The method for using the medium for plant cultivation 1 of the present embodiment will be described in detail below.

When a medium for plant cultivation 1 is used, it is desirable to retain sufficient moisture in fine cells on a surface of a crushed material 2 of foam bodies by the immersion of the medium in water in advance. The immersion time is preferably, for example, around 12 to 24 hours. When the immersed medium is pulled out of the water and drained, excess water drains from the bag body 3, and a water content suitable for the growth of a plant is obtained.

The moisture content of the medium for plant cultivation 1 can be calculated from the normal water retention rate. A sufficiently large bucket is filled with water, a medium for plant cultivation is submerged so as to be completely immersed in the water, and then left to stand for 24 hours or more. After being left to stand, the medium for plant cultivation 1 is pulled up in a sufficiently large colander, the mass of the medium one hour after the pulling up is measured, and the normal water retention rate can be calculated from the difference from the mass (initial mass) in a dry state of the medium for plant cultivation 1 measured in advance. In this regard, as the drainage from the medium for plant cultivation 1, natural drainage by gravity is adopted. The mass of the medium for plant cultivation 1 in a dry state is measured after the storage of 24 hours or more under an atmosphere of a temperature of 23°C and a humidity of 50%.

The normal water retention rate is calculated on the basis of the following equation (7) as the calculation equation.

(Normal water retention rate vol%) = {((Mass of medium for plant cultivation 1 one hour after start of pulling up) - (Mass of medium for plant cultivation 1 in dry state))/(Density of water)}/(Volume of medium for plant cultivation calculated from outer dimension) × 100 ... (7)

In this way, as the use example of the medium for plant cultivation 1 containing water, in addition to the use as a medium for elevated cultivation, use as an alternative medium to part or all of the soil in soil cultivation or planter cultivation is mentioned. In particular, the medium for plant cultivation 1 according to the present invention is excellent in the lightweight property, and thus can be suitably used as a medium for elevated cultivation.

As the specific application of the medium for plant cultivation 1 according to the present invention, for example, a medium for cultivation of fruits and vegetables such as tomatoes (the family Solanaceae) and strawberries (the family Rosaceae), or a medium for cultivation of leaf vegetables such as lettuces (the family Compositae) is mentioned. Further, in general, the application is not particularly limited as long as it is the cultivation of a plant species used as a cultivar. Examples of the plant species include bell peppers, eggplants, and the like that belong to the family Solanaceae like tomatoes, Chinese cabbages and the like that belong to the family Cruciferae, and cucumbers, bitter gourds, and the like that belong to the family Cucurbitaceae. In addition, plants that belong to the family Poaceae, the family Umbelliferae, the family Alliaceae, the family Compositae, the family Convolvulaceae, the family Iridaceae, or the like can also be cultivated.

Next, other embodiments of the medium for plant cultivation according to the present invention will be described with reference to drawings. In this regard, in the following embodiments, differences from the above first embodiment will be mainly described, and similar configurations are denoted by the same reference numerals, and the description thereof will omitted or briefly described.

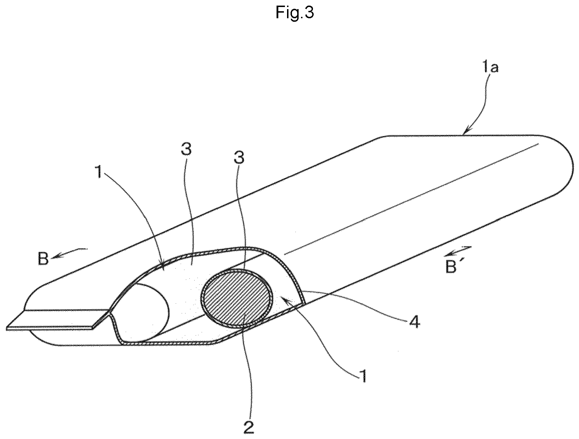

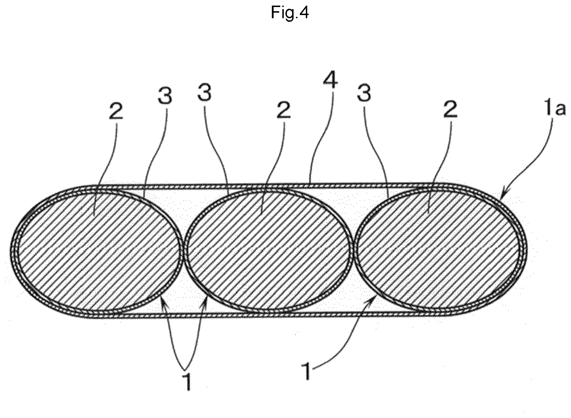

Fig. 3 is a schematic perspective view showing schematically a second embodiment of the medium for plant cultivation according to the present invention. Fig. 4 is a schematic sectional view in a cross section taken along the line B-B' of Fig. 3.

As schematically shown in Figs. 3 and 4, in the medium for plant cultivation 1a of the present embodiment, multiple media for plant cultivation 1 of the first embodiment, in each of which a crushed material 2 of foam bodies is packed in a bag body 3, are arranged in the short direction, and the outer side of the arranged media is wrapped with a resin film (hereinafter, referred to as "wrapping film 4") or the like as a wrapping material. The wrapping film 4 is preferably an aliphatic polyester-based resin such as a polylactic acid-based resin, but does not necessarily have to have biodegradability, and as the raw material, a polypropylene-based resin, a polystyrene-based resin, a polyethylene-based resin, or the like may be used.

As for such a medium for plant cultivation 1a, holes for planting a plant can be provided on the upper surface side of the wrapping film 4, and notches for drainage can be provided in the lower part on the side of the wrapping film 4. By providing holes and notches in the wrapping film 4, stable planting of a plant can be promoted without leaking the crushed material 2 of foam bodies packed in a bag body 3, and excess water inside the medium can be discharged.

When the medium for plant cultivation 1a is used, with the use of the holes for planting provided in the wrapping film 4 in advance as water injection ports, water can be poured through the water injection ports. After water is poured, the medium is left to stand for around 12 to 24 hours, and then notches for drainage are provided in the lower part on the side of the wrapping film 4, and excess water can drain from the notches.

As the use example of the medium for plant cultivation 1a in which water is allowed to be contained and the moisture content is adjusted in this way, similarly to the first embodiment, use as an alternative medium to part or all of the soil in soil cultivation or planter cultivation is mentioned in addition to the use as a medium for elevated cultivation.

Further, in a case where a resin film having biodegradability is used as the wrapping film 4, plant residues, and the medium for plant cultivation 1a can be composted together with the wrapping film 4 after the plant cultivation. On the other hand, in a case where a resin film not having biodegradability is used as the wrapping film 4, the wrapping film 4 is removed, and then plant residues, and the medium for plant cultivation 1a are composted.

Hereinafter, Examples will be described, but the medium for plant cultivation according to the present invention is not limited at all by these Examples.

Examples

1. Measurement of normal water retention rate in medium for plant cultivation

<Example 1>

As foam bodies, 5 kg of foamed beads (an apparent density of 20 kg/m$^3$, an average particle diameter of 5.3 mm, an average cell diameter of 188 $\mu$m, and a cell film thickness of 1.0 $\mu$m) of a polylactic acid-based resin having a bulk foaming ratio of 100 times were charged at a charging speed of 50 kg/hr from a charging port of a mesh mill (HA8-2542-25, manufactured by Horai Co., Ltd.) on which a 1.5$\Phi$ screen was set, and crushed.

The bulk foaming ratio of foamed beads of a polylactic acid-based resin is a value obtained by preparing a graduated cylinder with a volume of 1 L, packing the foamed beads into the graduated cylinder up to the marked line of 1 L, measuring the mass (g) of the packed foamed beads, performing unit conversion to determine the bulk density (kg/m$^3$), and then dividing the resin density of polylactic acid of 1.25 (g/cm$^3$) by the above bulk density.

The apparent density of the foamed beads of a polylactic acid-based resin was determined as follows. First, the foamed beads were left to stand for two days under the conditions of a relative humidity of 50%, a temperature of 23°C, and 1 atm. Next, a graduated cylinder in which water at a temperature of 23°C was put was prepared, and the foamed beads left to stand for two days were submerged in the water inside the graduated cylinder by using a wire mesh. Subsequently, while taking into consideration the volume of the wire mesh, the volume [L] of foam bodies, which can be read from the rise in water level, was measured. By dividing the mass of the foamed beads put in the graduated cylinder by the volume, the apparent density of the foamed beads was determined by performing the unit conversion.

On the basis of an enlarged photograph with a microscope of a cutting plane obtained by dividing a foam body into approximately two equal parts, the average cell diameter of the foamed beads of a polylactic acid-based resin was determined as follows. In the enlarged photograph of a cutting plane of a foam body, four line segments passing through the approximate center of a cutting plane of a cell were drawn from one surface to the other surface of the foam body. In this regard, the line segments were drawn so as to form radial straight lines extending in eight directions at equal intervals from the approximate center of a cutting plane of a cell to a surface of a cut particle. Next, the number of cells (n1 to n4) that intersect with the four line segments was counted, and the total sum of the number of cells intersecting respective line segments, N = n1 + n2 + n3 + n4 (pieces) is determined. Next, the total sum L ($\mu$m) of the length of four line segments was determined, and the average cell diameter (d') of foamed beads was calculated from the total sum L and the total sum N, by the equation (1). This work was performed on randomly selected 10 foam bodies, and the value obtained by arithmetically averaging the average cell diameter of the foamed beads was defined as the average cell diameter (d) of the foamed beads of a polylactic acid-based resin.

Since the cell film thickness of the foamed beads of a polylactic acid-based resin is ($\rho$f and $\rho$s) >> $\rho$g in the equation (2), assuming that $\rho$g is 0 (g/cm$^3$), Vs = $\rho$f/$\rho$s. Accordingly, the average cell film thickness T ($\mu$m) was calculated on the basis of the following equation (8).

$$T = d[(X/(X - 1))^{1/3} - 1] \ldots (8)$$

In this equation, $\rho$s represents a density of a base resin and was set to 1.25 since the resin density of polylactic acid is 1.25 (g/cm$^3$). Since $\rho$f represents an apparent density of foamed beads, $\rho$f was set to 0.020 (g/cm$^3$).

100% of the obtained crushed material passed through a sieve with an opening of 1.4 mm.

Further, when the specific surface area of the obtained crushed material of foam bodies was measured by a multipoint method using a BET adsorption tester (trade name: Smart VacPrep, manufactured by Micromeritics Instrument Corporation) with Kr gas, the value of the specific surface area was 1.28 $m^2/g$.

The opening of a sieve through which 90% by mass or more of the crushed material before being packed passed was determined as follows. The crushed material was sieved by a sieving screen with a nominal opening smaller than and closest to the screen of a mesh mill (shaken for 5 minutes). In a case where 90% by mass or more of the crushed material passed through the sieving screen, the crushed material was sieved again by a sieving screen with a secondly smaller nominal opening in a similar manner. By the above operation, the sieving was performed until 90% by mass or more of the crushed material did not pass through, and the smallest nominal opening through which 90% by mass or more of the crushed material passed is shown in Table 1.

A volume of 4.19 L and a mass of 152.5 g was fractionated from the crushed material of foam bodies of a polylactic acid-based resin thus obtained, packed into an elastic knit bag having a full-length of 1000 mm made of a polylactic acid-based resin, of which one of the ends is a heat-fused closed end and the other is an open end, and the open end was heat fused to obtain a medium for plant cultivation. The outer dimension of this medium was an approximately cylindrical shape having a diameter of 70 mm and a length of 990 mm. In addition, the volume of the crushed material after being packed, calculated from the outer dimension of the medium was 3.81 L. Since the volume was 4.19 L and the mass was 152.2 g, the bulk density of the crushed material before being packed was calculated to be 36.3 $kg/m^3$ by dividing the mass by the volume. Since the volume was 3.81 L and the mass was 152.2 g that was the same as the crushed material before being packed, the bulk density of the crushed material after being packed was calculated to be 39.9 $kg/m^3$.

A sufficiently large bucket was filled with water, a medium for plant cultivation was submerged so as to be completely immersed in the water, and then left to stand for 24 hours or more. After being left to stand, the medium was pulled up in a sufficiently large colander, the mass of the medium for plant cultivation 1 one hour after the pulling up was measured, and the normal water retention rate was calculated from the difference from the mass (initial mass) in a dry state of the medium for plant cultivation 1 measured in advance, on the basis of the equation (7). In this regard, as the drainage from the medium for plant cultivation 1, natural drainage by gravity was adopted. Further, the mass of the medium for plant cultivation 1 in a dry state was measured after the storage of 24 hours or more under an atmosphere of a temperature of 23°C and a humidity of 50%.

<Example 2>

A medium for plant cultivation was produced in a similar manner as in Example 1 except that the mesh diameter of the screen set in a mesh mill was changed to Φ3, and the produced medium was immersed in water.

<Example 3>

A medium for plant cultivation was produced in a similar manner as in Example 1 except that the mesh diameter of the screen set in a mesh mill was changed to Φ1.7, and the produced medium was immersed in water.

<Example 4>

A medium for plant cultivation was produced in a similar manner as in Example 1 except that the mesh diameter of the screen set in a mesh mill was changed to Φ4, and the produced medium was immersed in water.

<Comparative Example 1>

A medium for plant cultivation was produced in a similar manner as in Example 1 except that the foam body of a polylactic acid-based resin having a bulk foaming ratio of 100 times was packed into a bag body without being crushed by a mesh mill, and the produced medium was immersed in water.

<Comparative Example 2>

A medium for plant cultivation was produced in a similar manner as in Example 1 except that the mesh diameter of the screen set in a mesh mill was changed to Φ3 and the crushed material was packed into a bag body so that the consolidation degree was 1.00, and the produced medium was immersed in water.

The results of measuring various kinds of characteristic values in the media for plant cultivation of Examples 1 to 4 and Comparative Examples 1 to 2 are shown in Table 1.

[Table 1]

| | Example 1 | Example 2 | Example 3 | Example 4 | Comparative Example 1 | Comparative Example 2 |
|---|---|---|---|---|---|---|
| Bulk foaming ratio (times) | 100 | 100 | 100 | 100 | 100 | 100 |
| (A) Average particle diameter (mm) of foam bodies | 5.3 | 5.3 | 5.3 | 5.3 | 5.3 | 5.3 |
| Mesh diameter of screen set in mesh mill | $\phi$1.5 | $\phi$3 | $\phi$1.7 | $\phi$4 | - | $\phi$3 |
| (B) Opening (mm) of sieve through which 90% by mass or more of crushed material before being packed passed | 1.4 | 2.8 | 1.7 | 4.0 | 5.6 | 2.8 |
| (A)/(B) The number of Crushes | 3.8 | 1.9 | 3.1 | 1.3 | 0.9 | 1.9 |
| (C) Bulk density ($kg/m^3$) of crushed material before being packed | 36.3 | 18.2 | 32.0 | 13.6 | 12.4 | 18.2 |
| (D) Bulk density ($kg/m^3$) of crushed material after being packed | 39.9 | 20.0 | 35.2 | 14.3 | 13.6 | 18.2 |
| (D)/(C) Consolidation degree | 1.10 | 1.10 | 1.10 | 1.05 | 1.10 | 1.00 |
| Specific surface area ($m^2/g$) of crushed material before being packed | 1.28 | 1.16 | 1.25 | 0.70 | 0.09 | 1.16 |
| Normal water retention rate (vol%) | 29.4 | 12.1 | 22.3 | 9.3 | 5.0 | 8.3 |

As shown in Table 1, it was confirmed that as the opening of the sieve through which 90% by mass or more of the crushed material before being packed passed is smaller, the number of crushes is increased, and further the specific surface area of the crushed material before being packed into a bag body is increased, and the value of the normal water retention rate of the medium becomes large.

2. Cultivation test of tomato using medium for plant cultivation

Next, three bags of the media for plant cultivation of Example 3 were arranged in parallel in the longitudinal direction, and wrapped with a wrapping film made of a polyethylene resin, and cultivation test of tomatoes was conducted by using the wrapped media.

On the day before planting tomatoes, an opening for pouring water was made on the upper surface of the wrapping film, water was added in the wrapping film until the inside of the wrapping film was filled with water so that the entire media were immersed in water, and the media were left to stand for 24 hours. After the media were left to stand, the opening for pouring water provided on the upper surface of the wrapping film was widened to be almost the same size as that of the bottom of a nursery pot to make a planting hole, and multiple notches for drainage were provided in the lower parts on both sides of the wrapping film. This resultant wrapped media were placed on a large colander to drain excess water naturally by gravity.

Secondary seedling tomato (Frutica <registered cultivar>) seedlings, of each of which the bottom part of the nursery pot was hollowed out in accordance with the planting hole provided on the wrapping film of the media after drainage, were arranged on the media. In the planting, the distance between plants was set to 15 cm, the distance between beds was set to 110 cm, and 26 plants per bed were set. As the nutrient solution control after planting, a circulation type was adopted, and timer watering with a drip tube (manufactured by Netafim) was employed. As for the frequency of watering, the watering was conducted with a high frequency once every 30 minutes in a small amount. Further, the drainage rate was set to 20%. In addition, as for the environment in a greenhouse, day temperature (ventilation temperature)/night temperature (heating temperature) was set to 28°C/15°C.

Tomatoes were cultivated under such conditions, and after confirming the fruiting, the fruits were thinned out to have four fruits per fruit bunch, and the cultivation was continued until harvest. After the harvest of tomatoes, the wrapping film was removed from around the media for plant cultivation, and plant residues, the bag bodies, and the crushed materials of foam bodies were charged into compost without being separated.

<Results>

50 tomatoes cultivated in the media for plant cultivation of Examples were randomly selected, the weight and the sugar content were measured, and the obtained values were arithmetically averaged to determine the average weight value and the average sugar content value, respectively. The tomatoes cultivated in the media for plant cultivation of Examples had an average weight value of 19.9 g and an average sugar content of 5.9%. In this regard, the sugar content was measured by using a sugar content meter (trade name "PAL-1", manufactured by ATAGO CO., LTD.). On the other hand, the tomatoes cultivated in a coco peat medium that is one of the conventional media for plant cultivation had an average weight value of 19.3 g and an average sugar content value of 5.7%. From the above, it was able to be confirmed that the tomato fruits cultivated in the media for plant cultivation of Examples can have a quality substantially equal to that in the tomato fruits cultivated in the coco peat medium that is one of the conventional media for plant cultivation.

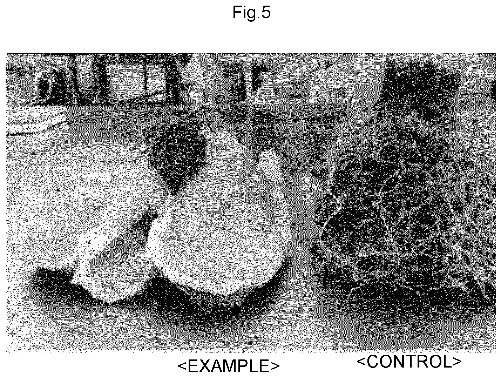

Further, when one of the media for plant cultivation of Examples was cut in the depth direction after the removal of the wrapping film, as shown in Fig. 5, it was able to be confirmed that the roots of tomatoes were mainly fine roots as in hydroponic cultivation, and were elongated so as to be concentrated in the central part and lower surface part of the medium. In addition, when plant residues, the bag bodies of the media for plant cultivation of Examples, and the crushed materials of foam bodies were charged into compost without being separated, it was confirmed that biodegradation was in progress.

Reference Signs List

1, 1a    Medium for plant cultivation
2        Crushed material
3        Bag body
4        Wrapping film

**Claims**

1.  A medium for plant cultivation, comprising:

    a bag body; and
    a crushed material obtained by crushing a foam body made of an aliphatic polyester-based resin, packed in the bag body in a compressed state, wherein
    a ratio of a bulk density of the crushed material after being packed in the bag body to a bulk density of the crushed material before being packed in the bag body is larger than 1 and 2 or less.

2.  The medium for plant cultivation according to claim 1, wherein a specific surface area of the crushed material before being packed in the bag body is 0.5 $m^2$/g to 2.0 $m^2$/g.

3.  The medium for plant cultivation according to claim 1 or 2, wherein a bulk density of the crushed material before being packed in the bag body is 10 kg/$m^3$ or more and less than 100 kg/$m^3$.

4.  The medium for plant cultivation according to any one of claims 1 to 3, wherein the bag body is a knit fabric, a woven fabric, or a nonwoven fabric, made of an aliphatic polyester-based resin.

5.  The medium for plant cultivation according to any one of claims 1 to 4, wherein the foam body is made of a polylactic acid-based resin.

Fig.1

Fig.2

Fig.3

Fig.4

Fig.5

<EXAMPLE>  <CONTROL>

**EP 3 949 725 A1**

<table>
<tr><td colspan="2" style="text-align:center">INTERNATIONAL SEARCH REPORT</td><td>International application No.</td></tr>
<tr><td colspan="2"></td><td>PCT/JP2020/014886</td></tr>
</table>

A. CLASSIFICATION OF SUBJECT MATTER
A01G 24/42(2018.01)i
FI: A01G24/42

According to International Patent Classification (IPC) or to both national classification and IPC

B. FIELDS SEARCHED

Minimum documentation searched (classification system followed by classification symbols)
A01G24/00-24/60

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2019-41759 A (MIKI TOKUSHU PAPER MFG. CO., LTD., E-SYSTEM INC.) 22.03.2019 (2019-03-22) paragraphs [0011]-[0039] | 1-5 |
| Y | WO 2011/062224 A1 (KANEKA CORP.) 26.05.2011 (2011-05-26) paragraphs [0022]-[0034] | 1-5 |
| Y | JP 2011-241262 A (KANEKA CORP.) 01.12.2011 (2011-12-01) paragraphs [0008]-[0024] | 1-5 |
| A | US 2003/0051398 A1 (KOSINSKI, Leonard Edward) 20.03.2003 (2003-03-20) entire text, all drawings | 1-5 |
| A | JP 2007-236228 A (MIKADO SEED GROWERS CO., LTD.) 20.09.2007 (2007-09-20) entire text, all drawings | 1-5 |
| A | JP 2011-135844 A (KAZE NO MIDORI JUKU KK) 14.07.2011 (2011-07-14) entire text, all drawings | 1-5 |

☒ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
15 June 2020 (15.06.2020)

Date of mailing of the international search report
23 June 2020 (23.06.2020)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

19

<table>
<tr><td colspan="3" align="center">**INTERNATIONAL SEARCH REPORT**</td><td>International application No.<br>PCT/JP2020/014886</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-110784 A (NEXCO-MAINTENANCE KANTO COMPANY LIMITED) 19.06.2014 (2014-06-19) entire text, all drawings | 1-5 |
| A | JP 2015-107082 A (UNITIKA LTD.) 11.06.2015 (2015-06-11) entire text, all drawings | 1-5 |
| A | JP 8-252031 A (KANEGAFUCHI CHEM IND CO., LTD.) 01.10.1996 (1996-10-01) entire text, all drawings | 1-5 |

Form PCT/ISA/210 (continuation of second sheet) (January 2015)

**INTERNATIONAL SEARCH REPORT**
Information on patent family members

| International application No. |
|---|
| PCT/JP2020/014886 |

| Patent Documents referred in the Report | Publication Date | Patent Family | Publication Date |
|---|---|---|---|
| JP 2019-41759 A | 22 Mar. 2019 | WO 2019/044726 A1 paragraphs [0011]-[0039] | |
| WO 2011/062224 A1 | 26 May 2011 | US 2012/0225967 A1 paragraphs [0043]-[0057] EP 2502958 A1 CN 102639619 A | |
| JP 2011-241262 A | 01 Dec. 2011 | (Family: none) | |
| US 2003/0051398 A1 | 20 Mar. 2003 | US 6397520 B1 WO 1999/031963 A1 CN 1282206 A | |
| JP 2007-236228 A | 20 Sep. 2007 | (Family: none) | |
| JP 2011-135844 A | 14 Jul. 2011 | (Family: none) | |
| JP 2014-110784 A | 19 Jun. 2014 | (Family: none) | |
| JP 2015-107082 A | 11 Jun. 2015 | (Family: none) | |
| JP 8-252031 A | 01 Oct. 1996 | (Family: none) | |

Form PCT/ISA/210 (patent family annex) (January 2015)

**EP 3 949 725 A1**

**REFERENCES CITED IN THE DESCRIPTION**

**Patent documents cited in the description**

- JP H0726262 A

- JP H08252031 A

**Non-patent literature cited in the description**

- Plastic Foam Handbook. THE NIKKAN KOGYO SHIMBUN, LTD, 28 February 1973, 37

- Plastic Foam Handbook. THE NIKKAN KOGYO SHIMBUN, LTD, 28 February 1973, 222